# EUROPEAN PATENT SPECIFICATION

(11) **EP 2 502 781 B1**
(45) Date of publication and mention of the grant of the patent: **13.05.2020**
(21) Application number: 11181967.8
(22) Date of filing: 20.09.2011
(51) Int. Cl.: B60N 2/30, B62K 15/00

(54) **Foldable seat rack**
Klappbares Sitzgestell
Bâti de siège pliable

(30) Priority: 21.03.2011 CN 201120074796 U; 15.09.2011 US 201113233972
(43) Date of publication of application: 26.09.2012
(73) Proprietor: DongGuan Prestige Sporting Products Co., Ltd., Dongguan City, Guangdong Province (CN)
(72) Inventor: Wu, Chichun, Dongguan City (CN); Zhang, Zhao, Dongguan City (CN)
(74) Representative: Weickmann & Weickmann PartmbB

(56) References cited:
- GB-A- 2 141 326
- US-A1- 2010 187 034

## Description

### FIELD OF THE INVENTION

The present invention relates to a seat rack, and more particularly to a foldable seat rack for a foldable motorized vehicle.

### BACKGROUND OF THE INVENTON

With the improvement of living standards, the life philosophy of being distinctive, fashionable, healthy, and environmentally friendly becomes popular, and fashionable and environmentally friendly articles for daily use and vehicles are favored by more and more people. Motorized vehicles evolve from being only a means of transport to being a symbol of a fashionable and healthy lifestyle, and are a means for practicing environmental protection. A foldable motorized vehicle saves storage room and is convenient to carry, and is small in size and light in weight after being folded, which makes it convenient to carry it up and down stairs, into and out of an elevator, and into a bus or metro train. Furthermore, the foldable motorized vehicle has a good appearance, and shows exquisite workmanship, thereby making it top equipment of fashion people.

For conventional foldable motorized vehicles, the folding mode is rather simple. Generally, a folding mechanism is disposed between a front wheel steering rod and a body rack, and the front wheel steering rod and the body rack are folded through the folding mechanism. However, for this mode, the size is still large after folding, and the reason lies in that the whole folding bicycle is not folded in a height direction. Particularly, the seat of the electric bicycle is normally not foldable, and occupies the largest room, thereby making the effect achieved by folding not desirable. With the ever increasing needs for living space and convenient travel in respect of carrying, obviously use requirements of people cannot be met.

Therefore, a heretofore unaddressed need exists in the art to address the aforementioned deficiencies and inadequacies.

Document GB 2141326 A which is considered to be closest prior art discloses a foldable seating structure that is configured to be movable between a storage position in which the seating structure is folded and a seating position in which the seating structure may be used by a user to sit on. The seating structure comprises pivotable rods and a locking mechanism.

Furthermore, document US 2010/187034 A1 shall be mentioned at this point.

### SUMMARY OF THE INVENTON

The present invention provides a foldable seat rack with a novel frame and with a simple yet novel structure, which is convenient to fold and unfold.

The present invention, in one aspect, is related to a seat rack, which can unfold or fold a seat of a folding bicycle, save storage room, and facilitate carrying.

The present invention provides a seat rack according to claim 1.

One side of an upper end of each of the hooks is opened with an opening facing backwards towards the seat, and the openings hook end portions of the middle shaft. As the seat base rotates to drive the middle shaft to rotate when the seat rack is being folded, the openings can prevent the middle shaft from rotating, thereby achieving a locking effect.

The seat rack further includes a handle, one end of the handle is fixed on the middle shaft, and the other end of the handle protrudes outwards. By pulling the handle to drive the middle shaft to move, the middle shaft departs from the hooks, thereby unlocking the seat base.

Preferably, the elastic element is a tension spring. The middle shaft may reset under an elastic restoring force of the tension spring, so as to achieve locking. The present invention has a simple structure and is easy to control.

Compared with the prior art, in the present invention, the upper rods and the lower rods are pivoted on the main supporting rods and are pivoted on the two ends of the seat base respectively, so that the rotatable seat rack is formed, thereby realizing the folding of the seat rack. Furthermore, the upper end of each of the main supporting rods is mounted with the hook, and a bottom portion of the seat base is disposed with the middle shaft capable of moving freely. Under a restoring force of the elastic element, the middle shaft is automatically hooked by the hooks, so that the whole seat rack is locked, thereby preventing the seat rack from being folded unexpectedly during traveling to incur dangers. After the whole seat rack is folded, the folding bicycle can save a large amount of storage room, thereby making the traveling and carrying very convenient.

These and other aspects of the present invention will become apparent from the following description of the preferred embodiment taken in conjunction with the following drawings, although variations and modifications therein may be affected as long as they remain within the scope of the appended claims.

### BRIEF DESCRIPTION OF THE DRAWINGS

Further features and benefits of the present invention will be apparent from a detailed description of a preferred embodiment thereof taken in conjunction with the following drawings, wherein similar elements are referred to with similar reference numbers, and wherein:
FIG. 1 is a side structural view of a seat rack according to the embodiment of the present invention;
FIG. 2 is a bottom perspective view of a seat rack according to the embodiment of the present invention;
FIG. 3 is a exploded side view of a seat rack according to the embodiment of the present invention;
FIG. 4 is a side view of a seat rack when it is unfolded according to the embodiment of the present invention; and
FIG. 5 a side view of a seat rack when it is mounted on a foldable motorized vehicle and completely folded according to the embodiment of the present invention.

### DETAILED DESCRIPTION OF THE INVENTION

The present invention is more particularly described in the following examples that are intended as illustrative only since numerous modifications and variations therein will be apparent to those skilled in the art. An embodiment of the invention is now described in detail. Referring to the drawings, like numbers indicate like components throughout the views. As used in the description herein and throughout the claims that follow, the meaning of "a", "an", and "the" includes plural reference unless the context clearly dictates otherwise. Also, as used in the description herein and throughout the claims that follow, the meaning of "in" includes "in" and "on" unless the context clearly dictates otherwise. Additionally, some terms used in this specification are more specifically defined below.

The terms used in this specification generally have their ordinary meanings in the art, within the context of the disclosure, and in the specific context where each term is used. Certain terms that are used to describe the disclosure are discussed below, or elsewhere in the specification, to provide additional guidance to the practitioner regarding the description of the disclosure. The use of examples anywhere in this specification, including examples of any terms discussed herein, is illustrative only, and in no way limits the scope and meaning of the disclosure or of any exemplified term. Likewise, the disclosure is not limited to the embodiment given in this specification.

Prior to a detailed description of the present invention, the following definitions are provided as an aid to understanding the subject matter and terminology of aspects of the present invention, and not necessarily limiting of the present invention, which are expressed in the claims. Whether or not a term is capitalized is not considered definitive or limiting of the meaning of a term. As used in this document, a capitalized term shall have the same meaning as an uncapitalized term, unless the context of the usage specifically indicates that a more restrictive meaning for the capitalized term is intended. A capitalized term within the glossary usually indicates that the capitalized term has a separate definition within the glossary. However, the capitalization or lack thereof within the remainder of this document is not intended to be necessarily limiting unless the context clearly indicates that such limitation is intended.

As used herein, "around", "about" or "approximately" shall generally mean within 20 percent, preferably within 10 percent, and more preferably within 5 percent of a given value or range. Numerical quantities given herein are approximate, meaning that the term "around", "about" or "approximately" can be inferred if not expressly stated.

As used herein, the terms "comprising," "including," "having," "containing," "involving," and the like are to be understood to be open-ended, i.e., to mean including but not limited to.

An embodiment of the present invention is described below with reference to the accompanying drawings, and in the accompanying drawings like reference numerals represent like elements.

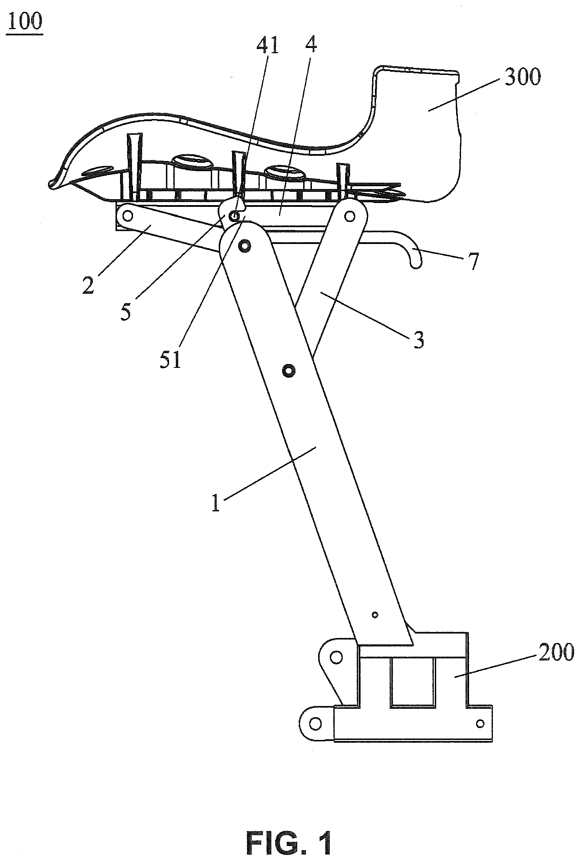

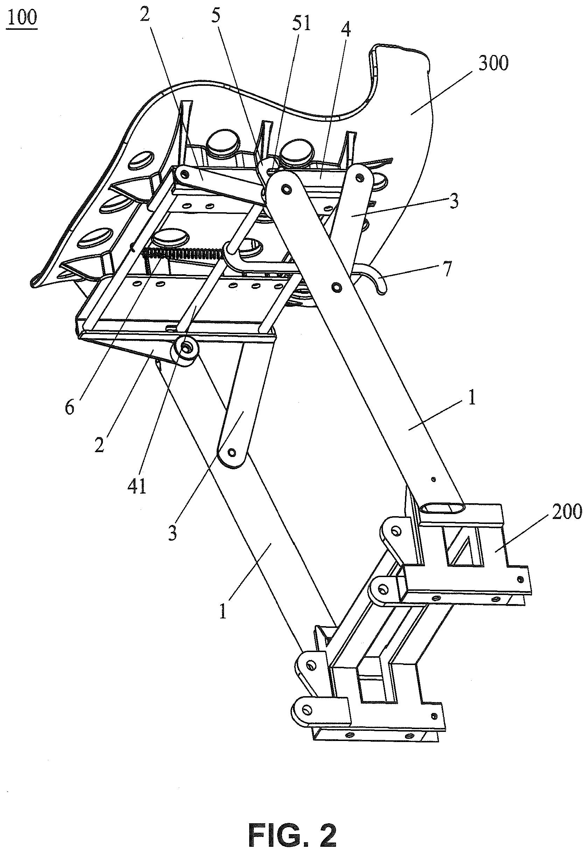

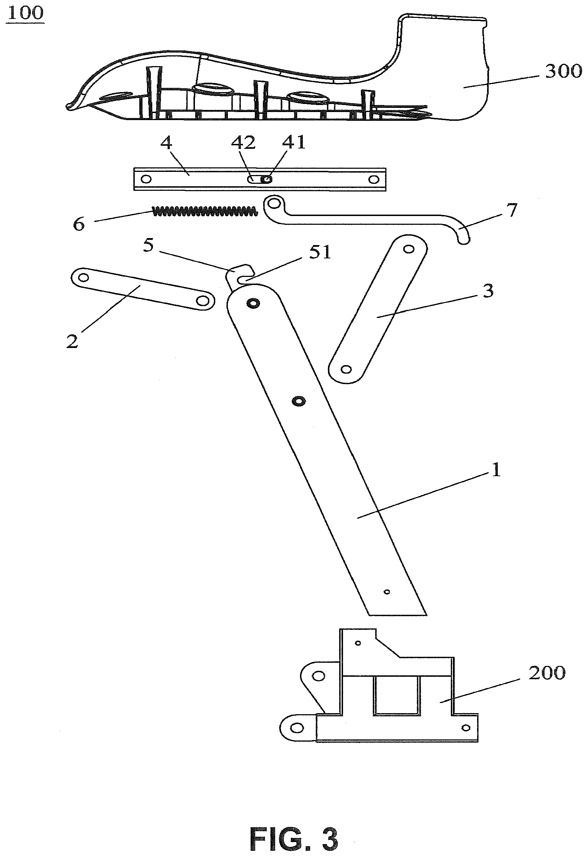

As shown in FIG. 1 , FIG. 2 and FIG. 3 , a seat rack 100 according to the present invention is mounted between a body rack 200 and a seat 300, and includes main supporting rods 1, upper rods 2, lower rods 3, a seat base 4, hooks 5, a tension spring 6, and a handle 7. Lower ends of the main supporting rods 1 are fixed on two sides of the body rack 200 respectively. Lower ends of the upper rods 2 are pivoted on upper ends of the main supporting rods 1 respectively. Upper ends of the upper rods 2 are pivoted on two sides of a front end of the seat base 4 respectively. Lower ends of the lower rods 3 are pivoted on middle portions of the main supporting rods 1 respectively. Upper ends of the lower rods 3 are pivoted on two sides of a rear end of the seat base 4 respectively. The hooks 5 are fixed on the upper ends of the main supporting rods 1 respectively. One side of an upper end of each of the hooks 5 is opened with an opening 51 facing backwards towards the seat 300. The seat base 4 has a middle shaft 41. Middle portions on two sides of the seat base 4 each are opened with a slide slot 42. Two ends of the middle shaft 41 pass through the slide slots 42 freely and are hooked by the openings 51 of the hooks 5. One end of the tension spring 6 is fixed on the front end of the seat base 4, and the other end of the tension spring 6 is fixed on the middle shaft 41. One end of the handle 7 is fixed on the middle shaft 41, and the other end of the handle 7 protrudes backwards from the seat 300. The handle 7 can drive the middle shaft 41 to depart from the hooks 5, thereby unlocking the seat base 4.

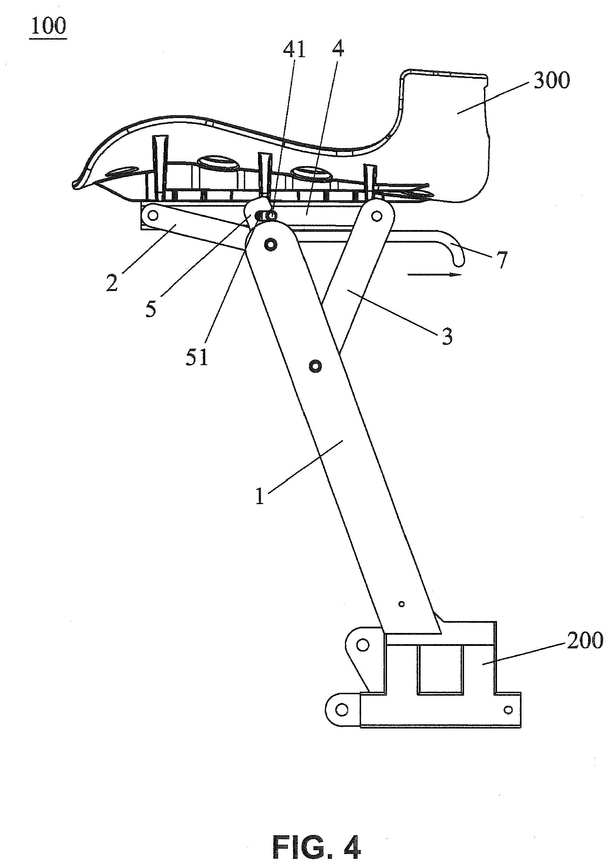

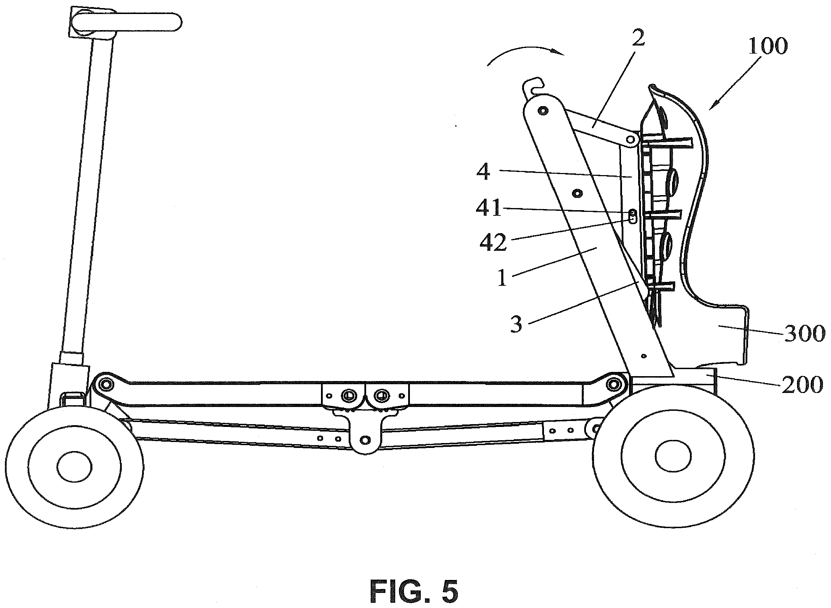

As shown in FIG. 4 and FIG. 5 , the two main supporting rods 1 are fixed on the two sides of the body rack 200 in a forwards inclined manner. The upper rods 2, the lower rods 3, and the seat base 4 form the seat rack 100. The seat 300 is fixed on an upper surface of the seat base 4. When the seat rack 100 is completely unfolded, the upper rods 2 and the lower rods 3 support the seat base 4 so that the seat base 4 is level. The tension spring 6 pulls the middle shaft 41 so that the middle shaft 41 is located at left ends of the slide slots 42. At the moment, the two ends of the middle shaft 41 are located in the openings 51 of the hooks 5, and the middle shaft 41 is fixed, so that the seat base 4 is fixed, thereby achieving locking. When the seat rack 100 is required to be folded, the handle 7 is pulled backwards manually, the handle 7 drives the middle shaft 41, and the middle shaft 41 moves from the left ends of the slide slots 42 to right ends of the slide slots 42, so that the two ends of the middle shaft 41 depart from the openings 51 of the hooks 5, and meanwhile the tension spring 6 is pulled, and the seat rack 100 is unlocked. At the moment, the seat 300 can be pushed to rotate backwards, and the seat 300 rotates backwards to drive the seat base 4 to rotate, so that the upper rods 2 rotate about the positions where the upper rods 2 are pivoted on the main supporting rods 1, the lower rods 3 rotate about the positions where the lower rods 3 are pivoted on the main supporting rods 1, and finally the seat 300 is folded on right sides of the main supporting rods 1.

In the present invention, the upper rods 2 and the lower rods 3 are pivoted on the main supporting rods 1, and are pivoted on the two ends of the seat base 4 respectively, so that the rotatable seat rack 100 is formed, thereby realizing the folding of the seat rack 100. Furthermore, the upper end of each of the main supporting rods 1 is mounted with the hook 5, and a bottom portion of the seat base 4 is disposed with the middle shaft 41 capable of moving freely. Under a restoring force of the tension spring 6, the middle shaft 41 is automatically hooked by the hooks 5, so that the whole seat rack 100 is locked, thereby preventing the seat rack 100 from being folded unexpectedly during traveling to incur dangers. Furthermore, the middle shaft 41 is disposed with the handle 7, and only the handle 7 is required to be pulled to unlock and fold the seat 300, thereby achieving a simple structure and use convenience. After the whole seat rack 100 is folded, the folding bicycle can save a large amount of storage room, thereby making the traveling and carrying very convenient.

Sizes and mounting methods of the main supporting rods 1 and the seat 300 involved in the seat rack 100 according to the present invention are all known to those of ordinary skill in the art, which will not be elaborated herein.

While there has been shown an embodiment of the present invention, it is to be understood that certain changes can be made as would be known to one skilled in the art as long as they remain within the underlying scope of the present invention as is discussed above and set forth in the claims. Furthermore, the embodiment described above and claims set forth below are only intended to illustrate the principles of the present invention and are not intended to limit the scope of the present invention to the disclosed elements.

## Claims

1. Foldable seat rack (100), mountable between a body rack (200) and a seat (300) of a foldable motorized vehicle, comprising:
(a) main supporting rods (1);
(b) upper rods (2);
(c) lower rods (3);
(d) a seat base (4);
(e) hooks (5);
(f) an elastic element (6); and
(g) a handle (7),
**characterized in that** lower ends of the main supporting rods (1) are fixable on two sides of the body rack (200) respectively, lower ends of the upper rods (2) are pivoted on upper ends of the main supporting rods (1) respectively, upper ends of the upper rods (2) are pivoted on two sides of a front end of the seat base (4) respectively, lower ends of the lower rods (3) are pivoted on middle portions of the main supporting rods (1) respectively, upper ends of the lower rods (3) are pivoted on two sides of a rear end of the seat base (4) respectively, the hooks (5) are fixed on the upper ends of the main supporting rods (1) respectively, the seat base (4) has a middle shaft (41), middle portions on two sides of the seat base (4) are opened with slide slots (42), two ends of the middle shaft (41) pass through the slide slots (42) freely and are hooked by the hooks (5), one end of the elastic element (6) is fixed on the front end of the seat base (4), and the other end of the elastic element (6) is fixed on the middle shaft (41), one side of an upper end of each of the hooks (5) is opened with an opening (51) facing backwards towards the seat (300) and the openings (51) hook end portions of the middle shaft (41), and one end of the handle (7) is fixed on the middle shaft (41), and the other end of the handle (7) protrudes outwards.

2. Foldable seat rack according to claim 1, wherein the elastic element (6) is a tension spring.

3. Foldable motorized vehicle comprising the foldable seat rack (100) according to claim 1.

## Patentansprüche

1. Faltbares Sitzgestell (100), welches zwischen einem Körpergestell (200) und einem Sitz (300) eines faltbaren motorisierten Fahrzeugs anbringbar ist, umfassend:
(a) Haupt-Halterungsstangen (1);
(b) obere Stangen (2);
(c) untere Stangen (3);
(d) eine Sitzbasis (4);
(e) Haken (5);
(f) ein elastisches Element (6); und
(g) ein Griff (7)
**dadurch gekennzeichnet, dass** untere Enden der Haupt-Halterungsstangen (1) an zwei Seiten des Körpergestells (200) entsprechend befestigbar sind, untere Enden der oberen Stangen (2) an oberen Enden der Haupt-Halterungsstangen (1) entsprechend schwenkbar sind, obere Enden der oberen Stangen (2) an zwei Seiten eines vorderen Endes der Sitzbasis (4) entsprechend schwenkbar sind, untere Enden der unteren Stangen (3) an mittleren Abschnitten der Haupt-Halterungsstangen (1) entsprechend schwenkbar sind, obere Enden der unteren Stangen (3) an zwei Seiten eines hinteren Endes der Sitzbasis (4) entsprechend schwenkbar sind, die Haken (5) an den oberen Enden der Haupt-Halterungsstangen (1) entsprechend befestigt sind, die Sitzbasis (4) einen mittleren Schaft (41) aufweist, mittlere Abschnitte an zwei Seiten der Sitzbasis (4) mit Gleitausnehmungen (42) geöffnet sind, zwei Enden des mittleren Schafts (41) durch die Gleitausnehmungen (42) frei hindurchtreten und durch die Haken (5) verhakt sind, ein Ende des elastischen Elements (6) an dem vorderen Ende der Sitzbasis (4) befestigt ist und das andere Ende des elastischen Elements (6) an dem mittleren Schaft (41) befestigt ist, eine Seite eines oberen Endes von jedem der Haken (5) mit einer Öffnung (51) geöffnet ist, welche in Richtung des Sitzes (300) nach hinten weist, und wobei die Öffnungen (51) mit Endabschnitten des mittleren Schafts (41) verhakt sind, und ein Ende des Griffs (7) an dem mittleren Schaft (41) befestigt ist und das andere Ende des Griffs (7) nach außen vorsteht.

2. Faltbares Sitzgestell nach Anspruch 1, wobei das elastische Element (6) eine Zugfeder ist.

3. Faltbares motorisiertes Fahrzeug, umfassend das faltbare Sitzgestell (100) nach Anspruch 1.

## Revendications

1. Support de siège pliable (100), pouvant être monté entre un support de carrosserie (200) et un siège (300) d'un véhicule motorisé pliable, comprenant :
(a) des tiges de support principales (1) ;
(b) des tiges supérieures (2) ;
(c) des tiges inférieures (3) ;
(d) une base de siège (4) ;
(e) des crochets (5) ;
(f) un élément élastique (6) ; et
(g) une poignée (7),
**caractérisée en ce que** les extrémités inférieures des tiges de support principales (1) peuvent être fixées respectivement sur deux côtés du support de corps (200), les extrémités inférieures des tiges supérieures (2) sont pivotées respectivement sur les extrémités supérieures des tiges de support principales (1), les extrémités supérieures des tiges supérieures (2) sont pivotées respectivement sur deux côtés d'une extrémité avant de la base de siège (4), les extrémités inférieures des tiges inférieures (3) sont respectivement pivotées sur les parties centrales des tiges de support principales (1), les extrémités supérieures des tiges inférieures (3) sont respectivement pivotées sur deux côtés d'une extrémité arrière de la base de siège (4), les crochets (5) sont respectivement fixés sur les extrémités supérieures des tiges de support principales (1), la base de siège (4) comporte un arbre central (41), les parties centrales des deux côtés de la base de siège (4) sont ouvertes par des fentes de glissement (42), deux extrémités de l'arbre central (41) passent librement à travers les fentes de glissement (42) et sont accrochées par les crochets (5), une extrémité de l'élément élastique (6) est fixée sur l'extrémité avant de la base de siège (4), et l'autre extrémité de l'élément élastique (6) est fixée sur l'arbre central (41), un côté d'une extrémité supérieure de chacun des crochets (5) est ouvert avec une ouverture (51) tournée vers l'arrière en direction du siège (300) et les ouvertures (51) accrochent les parties d'extrémité de l'arbre central (41), et une extrémité de la poignée (7) est fixée sur l'arbre central (41), et l'autre extrémité de la poignée (7) fait saillie vers l'extérieur.

2. Support de siège pliable selon la revendication 1, dans lequel l'élément élastique (6) est un ressort de tension.

3. Véhicule motorisé pliable comprenant le support de siège pliable (100) selon la revendication 1.
